Europäisches Patentamt

European Patent Office

Office européen des brevets

(19)

(11) Numéro de publication: **0 369 885**

**A1**

(12) # DEMANDE DE BREVET EUROPEEN

(21) Numéro de dépôt: 89403156.6

(22) Date de dépôt: 17.11.89

(51) Int. Cl.⁵: **F16F 1/38**

(30) Priorité: 17.11.88 FR 8814945

(43) Date de publication de la demande:
23.05.90 Bulletin 90/21

(84) Etats contractants désignés:
AT BE CH DE ES FR GB GR IT LI LU NL SE

(71) Demandeur: **CAOUTCHOUC MANUFACTURE
ET PLASTIQUES SOCIETE ANONYME**
**143 bis, rue Yves Le Coz**
**F-78000 Versailles(FR)**

(72) Inventeur: **Bechu, Jean-Pierre**
**Les Poissons 20 ter, rue de Bezons**
**F-92400 Courbevoie(FR)**

(54) **Support élastique à rotules déformables pour la fixation d'un garnissage avec rappel élastique amorti présentant une course latérale importante.**

(57) Support élastique à rotules déformables pour la fixation d'un garnissage entre deux éléments mobiles, permettant à celui-ci de demeurer en position moyenne d'équilibre, caractérisé en ce qu'il comporte deux rotules présentant un rappel élastique (2) dû à la liaison adhérisée caoutchouc-métal, les bagues extérieures (6) étant solidarisées, par emmanchement, dans un tube d'assemblage (1) commun, les bagues intérieures (7), en forme de rotules, étant solidaires des moyens de fixation (4) ou (5) sur un plan dans lequel s'exercent les débattements relatifs principaux et venant prendre appui sur une rondelle d'appui (3).

FIG. 2

EP 0 369 885 A1

L'invention est du domaine des supports élastiques par liaison caoutchouc-métal entre une vis et/ou un écrou adhérisés à une masse élastiquement déformable et est utilisée pour le maintien en position d'un garnissage d'aspect et de protection du public dans un véhicule ou une passerelle, lorsque l'appui subit des déplacements.

Ladite invention propose une réalisation de la liaison par assemblage de pièces adhérisées faisant appel à la même technique que les articulations élastiques. Un frottement sur des surfaces à bas coefficient de friction assure le positionnement géométrique en butée permanente et l'amortissement des débattements latéraux.

Les moyens pour supporter élastiquement un garnissage, lorsque la base d'appui subit des déplacements relatifs, font couramment appel aux élastomères, grâce à la liaison chimique réalisée au cours de la vulcanisation entre les embases de fixation, plaques, vis ou écrous -le plus souvent métalliques- et la masse élastiquement déformable, en caoutchouc naturel ou synthétique, qui apporte la flexibilité nécessaire et le rappel élastique entre les deux solides qu'elle raccorde.

Chaque caoutchoutier propose une gamme de produits standards répondant à ces problèmes. Pour Caoutchouc Manufacturé et Plastiques, la fiche 79-A3 présente la famille des supports antivibratoires Double U, références M.9001-9002-9003 où deux parallélépipèdes de caoutchouc relient élastiquement deux armatures métalliques en forme de U en opposition. D'autre part, la fiche 79-A2 décrit des sandwiches parallélépipèdiques de caoutchouc reliant deux armatures planes, tels la référence M4001, ou plus particulièrement la référence M4004 à faces inclinées. Cette dernière permet des débattements latéraux allant jusqu'à 24 millimètres parallèlement aux faces d'appui, la hauteur totale étant de 40 millimètres entre ces faces.

Cependant, la géométrie de telles pièces impose, même avec les modules d'élastomères les plus bas que l'on puisse utiliser, des réactions, sous les déplacements imposés avoisinant 100 à 200 daN, ce qui les exclut pour l'appui élastique de garnissages légers comme ceux rencontrés dans des véhicules articulés, ferroviaires ou routiers. Certains fabricants allègent les pièces par une section réduite qui permet, sous des contraintes modérées les déformations notables qui sont recherchées. C'est ainsi qu'une bobine de forme diabolo, toroïdale, est réalisée aussi bien en caoutchouc synthétique qu'en polyuréthane par plusieurs caoutchoutiers, en particulier pour l'usage en articulation des mâts de planche à voile.

Les contraintes réduites, dans cette solution, ont comme corollaire un risque de rupture notable et les perfectionnements - autres qu'un câble ou une chaîne de sécurité extérieurs - consistent à noyer dans l'élastomère un câble en fils d'acier assurant la sécurité à la traction. Ceci fait, par exemple, l'objet du brevet FR 2.509.000 de WAGER, aussi bien que celui du brevet DE 1.103.773 de AUTO-UNION, plus spécialement applicable à des supports moteurs d'automobile. La nécessité d'incorporer une sécurité est la preuve même que ces produits présentent, difficilement, une bonne tenue à la fatigue répétitive et doivent être remplacés fréquemment.

Le catalogue 2021-3, de KLEBER département KLEMECA, présentait de petites pièces supports "basse fréquence" aujourd'hui abandonnées, dont les plus gros modèles auraient pu assurer la déformabilité recherchée, grâce à leur forme d'anneau déformable reliant deux éléments de fixation. Cette conception entraîne un maintien élastique aussi souple dans toutes les directions, avec l'inconvénient, d'une part, d'une déflexion notable sous l'effet de la pesanteur, et d'autre part d'un positionnement exagérément souple dans les directions perpendiculaires. Pour supporter un garnissage d'aspect et de protection, avec des débattements centimétriques permanents, rien ne vient alors amortir ni limiter, en cas d'excitation périodique, le positionnement géométrique.

L'objet de la présente invention est de proposer une solution aisément réalisable et répondant à tous les besoins d'appui élastique d'un garnissage d'aspect et de protection du public, dans un véhicule articulé ou une passerelle d'accès à un navire ou un avion, lorsque la base qui sert de point d'appui au support subit des déplacements, périodiques ou aléatoires, notables dans le plan de cet appui - c'est-à-dire que l'écartement des divers points d'appui subit des variations de quelques centimètres, importantes par rapport à l'encombrement accepté pour les supports, mais restent sensiblement dans un même plan.

L'invention consiste en un support élastique à rotules déformables pour la fixation d'un garnissage entre deux éléments mobiles, permettant à celui-ci de demeurer en position moyenne, définie par l'équilibre des déformations latérales entre les deux éléments mobiles, perpendiculairement à la charge de pesanteur et perpendiculairement aussi aux plans de fixation où pourraient s'exercer des poussées parasites, caractérisé en ce qu'il comporte deux rotules présentant un rappel élastique dû à la liaison adhérisée caoutchouc-métal, les bagues extérieures étant solidarisées par emmanchement dans un tube cylindrique commun, les rotules étant solidaires des moyens de fixation par vis ou écrou, sur un plan dans lequel s'exercent les débattements relatifs principaux.

L'invention sera mieux comprise à la lecture de la description accompagnant les dessins dans lesquels :

- la figure 1 représente, en coupe axiale suivant un axe de révolution, le support élastique à rotules déformables en position alignée, en l'absence d'efforts.

- la figure 2 représente la même coupe axiale du dispositif, en déviation maximale perpendiculairement au plan de coupe.

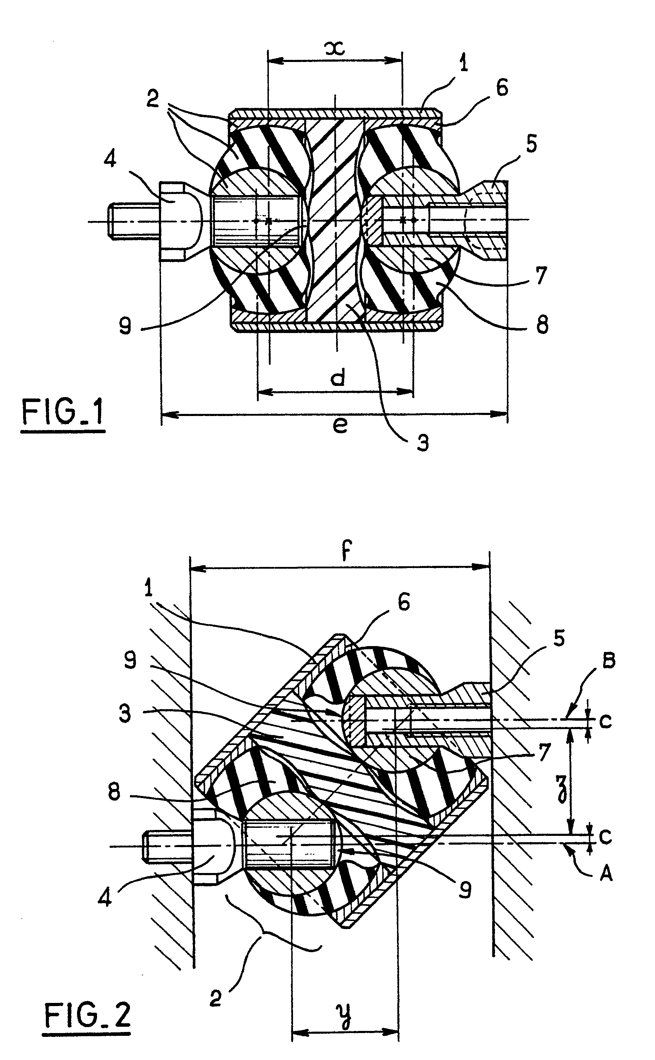

La figure 1 est une coupe axiale du support élastique à rotules déformables selon l'invention. En l'absence de charge de pesanteur et d'efforts provoquant une déviation par rapport à la position d'équilibre, l'ensemble présente une symétrie de révolution. Un tube d'assemblage (1), préférentiellement en acier, assure la solidarisation de deux rotules à rappel élastique (2), identiques, par emmanchement de leurs bagues extérieures (6). Une rondelle d'appui (3), en matériau antifriction tel que, à titre d'exemple non limitatif, le polyéthylène de masse moléculaire au moins égale à 500.000 est interposée, à l'emmanchement, entre lesdites bagues extérieures. La fixation peut être assurée, d'un côté, par un pion à vis (4) et, de l'autre, par un pion fileté (5), mais toute autre combinaison vis-vis ou fileté-fileté est possible, le choix n'étant motivé que par l'accessibilité . En effet, la fixation du côté garnissage exerce en permanence des efforts de pesanteur perpendiculairement à l'axe et des poussées accidentelles d'appui des voyageurs dans la direction de l'axe. La fixation opposée du côté base d'appui va subir des déplacements dans son plan, raison pour laquelle la fixation vis/écrou est nécessaire.

Les pions de type (4) ou (5) sont solidarisés aux bagues intérieures (7) des rotules à rappel élastique (2), par emmanchement serré, dans une opération préalable au montage dans le tube d'assemblage (1).

Chaque rotule à rappel élastique (2) est fabriquée indépendamment par moulage de sa masse élastomérique (8), où, pendant la réticulation, sous l'effet de la chaleur, se produit la liaison chimique intime appelée adhérisation avec les bagues rigides. Chaque bague extérieure (6), faite d'acier ou de plastique renforcé ou chargé, présente préférentiellement une face interne creusée de façon sensiblement sphérique. La bague intérieure (7), de préférence métallique, présente préférentiellement une face extérieure bombée et sensiblement sphérique, en forme de rotule, de façon que les débattements coniques de la masse élastomérique (8) qui relie lesdites bagues (6) et (7) se produisent à épaisseur sensiblement constante. Une précompression radiale améliore la tenue à la fatigue alternative, par exemple par un rétreint mécanique de la bague extérieure (6), destinée à l'emmanchement. La rotule à rappel élastique (2) présente sensiblement un plan de symétrie à l'état libre, situation dans laquelle sont solidarisés à sa bague intérieure (7) les pions (4) ou (5), par emmanchement à la presse.

Une sécurité à l'arrachement peut, facultativement, être ajoutée par rivetage du bout libre desdits pions (4) et (5) par crainte d'une faible tenue du fait de leur petit diamètre. De toutes façons, une forme sphérique doit être reconstituée sur ledit bout libre (9) par déformation de matière et usinage dans le chanfrein que présente la bague intérieure (7). Après l'emmanchement des bagues extérieures (6) dans le tube d'assemblage (1), une légère déformation axiale de la masse élastomérique (8) vient exercer un appui permanent desdits bouts libres (9), de forme sphérique, de part et d'autre de la rondelle d'appui (3).

La figure 2 représente le même dispositif quand les pièces déformables subissent leur déviation maximale. Les bouts libres (9), en appui sphérique permanent, pivotent sur la rondelle d'appui (3) qui doit avoir une forme légèrement creusée, de révolution, de façon que les faces déformées de la masse élastomérique (8) viennent en appui sur la rondelle (3) quand les bouts libres (9) s'effacent en fin de déviation importante.

Sous l'effet de la réaction élastique qui écarte les axes (A) et (B) restant sensiblement parallèles dans la déformation des supports, un léger excentrage (c) se produit entre les bagues intérieures (7) et les bagues extérieures (6). Cet excentrage (c) accroit la distance des axes (A) et (B) par rapport à la distance (z) du centre des bagues extérieures (6), projection de l'entraxe (x) dans le même plan ; ce qui accroit l'effet de la simple rotation de l' entraxe (x) en figure 1, matérialisé en (y) sur la figure 2.

En cas de poussée accidentelle sur le garnissage, ce sont les bouts libres (9) qui assurent une réaction rigide par contact sur la rondelle d'appui (3), tant que la déviation ne les fait pas encore échapper à l'appui permanent. Ce dernier est dû, en position alignée, à la déformation axiale qui fait passer de l'entraxe (d) des bagues intérieures (7) à l'entraxe (x) des bagues extérieures (6) lors de l'assemblage. Un tel appui permanent exerçant une précontrainte de quelques décaNewton n'empêche pas un décollement par un acte de malveillance dont l'auteur exercerait und traction sur le garnissage. La rigidité axiale des rotules à rappel élastique (2) limiterait rapidement l'effet de cette traction à quelques dizaines de daN évitant ainsi la destruction de la pièce. En position déviée, les bouts libres (9) de chaque pion (4) ou (5) échappent à l'appui tandis que la surface de la masse élastomérique (8) se substitue à leur rôle et assure donc, avec une rigidité devenue élevée du fait de la surface notable en appui, la résistance aux poussées accidentelles sur le garnissage.

En position déviée, l'écartement (f) entre les plans d'appui s'est réduit par rapport à l'écartement (e) dans la position alignée, mais la substitution de l'appui par la masse élastomérique (8) au rôle du bout libre (9) permet que la différence (e-f) ne soit pas nécessairement égale à la déviation (x-y) due à la rotation des bagues extérieures (6) tenues par le tube d'assemblage (1).

S'il est souhaité que les écartements (e) et (f) demeurent voisins, la conformation des deux faces de la rondelle d'appui (3) permet de porter remède à la déviation géométrique (x-y) et de réduite son effet sur (e-f).

Lors des mouvements alternés, la composante de pesanteur, équilibrée par la rigidité angulaire modérée de l'ensemble des articulations élastiques (2), définit une trajectoire sensiblement horizontale, en déflexion élastique, de quelques millimètres. Cependant, les efforts tangentiels de friction exercés soit par les bouts libres (9), soit par la masse d'élastomère (8) sur la rondelle d'appui (3), présentent des ordres de grandeur voisins de la contrainte de pesanteur et, de ce fait empèchent, en toutes circonstances, toute vibration périodique du garnissage. L'équilibre vertical de l'ensemble se fait sans inconvénient avec un statisme, c'est-à-dire une altitude indifférente, de quelques millimètres. Le positionnement transversal, par ailleurs, permet une butée positive du garnissage, acceptant un écartement mais opposant une rigidité suffisante, en cas de traction intempestive ou malveillante ou coincement accidentel.

Quant au positionnement qui pourrait être appelé longitudinal par rapport aux plans de fixation, il se produit par un équilibre élastique du garnissage par symétrie lors des variations d'entraxe de ses appuis.

En particulier, une poussée accidentelle exagérée au droit de l'un des supports à rotules déformables, non équilibré sur l'opposé, accroit la déviation des axes (A) et (B), plutôt par l'excentrage (c) à rigidité devenue alors dix à vingt fois plus élevée que la valeur initiale, que par une réaction oblique de glissement sur la rondelle d'appui (3). En effet, cette poussée s'applique par les masses d'élastomère (8), déformées sur des zones de contact presque alignées de part et d'autre de la rondelle d'appui (3), et non par les rotules écartées de $(z+2c)$. Le couple de basculement du tube d'assemblage (1) est donc limité grâce à la forme donnée à la rondelle d'appui. Celle limitation du couple de basculement évite par conséquent un contact peu souhaitable entre le tube d'assemblage (1) et les plans d'appui.

En résumé, l'invention apporte un maintien vertical, dont le positionnement peut se faire de façon élastiquement équilibrée entre des bases d'appui en déplacement latéral périodique, tout en permettant l'appui positif que demande un garnissage de protection et d'aspect.

Elle permet un positionnement vertical sûr, sans oscillation, car sa grande flexibilité peut être bien amortie tout en présentant les avantages d'une fixation élastique simple par vis ou écrou.

Le procédé de réalisation ne fait appel qu'à des techniques très classiques dans l'industrie du caoutchouc, en particulier avec des précontraintes radiales de rétreint de bagues élastiques qui sont garantes de très bonne tenue à la fatigue alternée, dépassant largement les durées de vie obtenues par les pièces usuelles de support élastique.

## Revendications

1°) Support élastique à rotules déformables pour la fixation d'un garnissage entre deux éléments mobiles, permettant à celui-ci de demeurer en position moyenne, définie par l'équilibre des déformations latérales entre les deux éléments mobiles, perpendiculairement à la charge de pesanteur et perpendiculairement aussi aux plans de fixation où pourraient s'exercer des poussées parasites, caractérisé en ce qu'il comporte deux rotules présentant un rappel élastique (2) dû à la liaison adhérisée caoutchouc-métal, les bagues extérieures (6) étant solidarisées, par emmanchement, dans un tube d'assemblage (1) commun, les bagues intérieures (7), en forme de rotules, étant solidaires des moyens de fixation par pion à vis (4) ou pion fileté (5) sur un plan dans lequel s'exercent les débattements relatifs principaux et venant prendre appui sur une rondelle d'appui (3).

2°) Support élastique à rotules déformables, selon la revendication 1, caractérisé en ce que la rondelle d'appui (3) présente une conformation de révolution, sur ses deux faces, telle que peuvent venir y prendre appui soit les bouts libres (9) des pions à vis ou filetés (4) ou (5) soit la masse élastomérique (8) des rotules à rappel élastique (2), sans que l'écartement entre les plans d'appui soit sensiblement modifié sous l'effet des déformations.

3°) Support élastique à rotules déformables, selon la revendication 2, caractérisé en ce que la rondelle d'appui (3) est réalisée en polyéthylène de masse moléculaire au moins égale à 500.000.

FIG.1

FIG.2

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-2172706 (M.JULIEN) <br> * page 3, lignes 7 - 38; figures 16-18 * <br> --- | 1 | F16F1/38 |
| A | US-A-2241408 (H.LORD) <br> * page 2, colonne 2, ligne 15 - page 3, colonne 1, ligne 61; figures 1, 2, 4-6 * <br> --- | 1, 2 | |
| A | US-A-2317190 (R.HENSHAW) <br> * le document en entier * <br> --- | 1, 2 | |
| A | FR-A-1014347 (L.THIRY) <br> * page 4, colonne 2, ligne 17 - page 5, colonne 1, ligne 26; figures 4-6 * <br> ----- | 1, 2 | |

**DOMAINES TECHNIQUES RECHERCHES (Int. Cl.5 )**

F16F
B60G
F16D

Le présent rapport a été établi pour toutes les revendications

| Lieu de la recherche | Date d'achèvement de la recherche | Examinateur |
|---|---|---|
| LA HAYE | 22 FEVRIER 1990 | CZAJKOWSKI A.R. |